# EUROPEAN PATENT SPECIFICATION

(11) **EP 2 940 190 B1**
(45) Date of publication and mention of the grant of the patent: **11.07.2018**
(21) Application number: 13867303.3
(22) Date of filing: 21.11.2013
(51) Int. Cl.: C23C 26/00, B05D 7/14, B32B 15/08, C09D 5/08, C09K 19/12, C09K 19/52, C09K 19/04

(54) **SURFACE TREATMENT COMPOSITION, METHOD FOR PRODUCING SURFACE TREATMENT COMPOSITION, METAL ARTICLE, AND METHOD FOR PRODUCING METAL ARTICLE**
OBERFLÄCHENBEHANDLUNGSZUSAMMENSETZUNG, VERFAHREN ZUR HERSTELLUNG DER OBERFLÄCHENBEHANDLUNGSZUSAMMENSETZUNG, METALLARTIKEL UND VERFAHREN ZUR HERSTELLUNG DES METALLARTIKELS
COMPOSITION DE TRAITEMENT DE SURFACE, PROCÉDÉ POUR LA PRODUCTION DE LA COMPOSITION DE TRAITEMENT DE SURFACE, ARTICLE MÉTALLIQUE ET PROCÉDÉ POUR LA PRODUCTION DE L'ARTICLE MÉTALLIQUE

(30) Priority: 28.12.2012 JP 2012289010
(43) Date of publication of application: 04.11.2015
(73) Proprietor: Hoden Seimitsu Kako Kenkyusyo Co., Ltd., Atsugi-shi, Kanagawa 243-0213 (JP)
(72) Inventor: KOSHINA Takafumi, Atsugi-shi Kanagawa 243-0213 (JP)
(74) Representative: Schollweck, Susanne
(86) International application number: PCT/JP2013/081381
(87) International publication number: WO 2014/103578

(56) References cited:
- EP-A1- 0 567 649
- EP-A1- 1 978 077
- JP-A- H1 139 646
- JP-A- H05 179 280
- JP-A- 2004 359 848
- JP-A- 2008 031 245
- US-A1- 2008 194 441

## Description

### TECHNICAL FIELD

The present invention relates to a surface treatment composition, a metal article, and a method of producing a metal article.

### BACKGROUND ART

As a lubricant containing liquid crystal molecules, for example, the following examples can be adopted.

Patent Document 1 discloses a lubricant composition containing a liquid crystal compound and a fluorine-containing polyether. This lubricant composition is obtained by dispersing the liquid crystal compound in the fluorine-containing polyether. In addition, Patent Document 1 describes that, due to the dispersion of the liquid crystal compound, the lubricity is improved, and the low frictional coefficient of the liquid crystal compound and the chemical stability of the fluorine-containing polyether are simultaneously improved.

Patent Document 2 discloses a lubricating oil composition containing a base oil and liquid crystal, in which a friction modifier is added to the lubricating oil composition. According to the lubricating oil composition, the frictional properties and wear resistance of a mechanical friction portion can be improved.

In addition, as a technique of forming a coating film using a lubricant, the following examples can be adopted.

Patent Document 3 discloses a technique of forming an organic coating film using a lubricant such as polyethylene wax. In addition, Patent Document 3 describes that the coating film can be applied to a fixing frame or a back surface cover of a liquid crystal panel, a drive device case of a storage medium, or a member formed of aluminum or an aluminum alloy which is used for a chassis.

Patent Document 4 discloses a protective coating composition which includes a lubricant without including metal particles, in which the lubricant contains a wax such as polyethylene wax or polyolefin-containing wax. In addition, Patent Document 4 describes that, by coating a metal substrate such as a bolt or a nut with the protective coating composition, the corrosion of the metal substrate can be prevented.

Patent Document 5 discloses a technique of coating a magnetic recording medium surface, such as a disc, including a magnetic layer with a lubricant containing tricyclic liquid crystal molecules.

Patent Document 6 discloses a grease composition comprising 3-95 wt% of a liquid crystalline compound.

Patent Document 7 discloses an electro-viscous fluid that is composed mainly of a ferroelectric liquid crystal substance.

Patent Document 8 discloses a lubricant additive comprising a hydrolyzable organosilicon compound, a lubricant additive composition comprising a combination of (A) the lubricant additive with (B) a rust-preventing agent, and a lubricant composition comprising a base oil comprising a mineral oil and/or a synthetic oil and either the lubricant additive or the lubricant additive composition.

Patent Document 9 discloses an electroviscous fluid containing an antioxidant and/or a metal corrosion inhibitor or solid particles as a dispersoid in an electrically insulating fluid as a dispersion medium consisting principally of a liquid crystal substance.

Patent Document 10 discloses a grease composition comprising at least one polymer having a mesogen structure in the principal chain or in the side chain(s) thereof, and at least one viscous agent.

Patent Document 11 relates to a lubricant composition to be supplied to mechanical friction sliding members and also relates to a method for producing triazine derivatives.

### RELATED DOCUMENT

### PATENT DOCUMENT

[Patent Document 1] Japanese Patent No. 2500296
[Patent Document 2] Japanese Unexamined Patent Application Publication No. H06-128582
[Patent Document 3] Japanese Patent No. 4259785
[Patent Document 4] Japanese Unexamined Patent Application Publication No. 2009-108334
[Patent Document 5] Japanese Unexamined Patent Application Publication No. H11-39646
[Patent Document 6] Japanese Unexamined Patent Application Publication No. 2004-359848
[Patent Document 7] Japanese Unexamined Patent Application Publication No. H05-179280
[Patent Document 8] Japanese Unexamined Patent Application Publication No. 2008-31245
[Patent Document 9] European Patent Application Publication No. 0 567 649 A1
[Patent Document 10] U.S. Patent Application Publication No. 2008/0194441
[Patent Document 11] European Patent Application Publication No. 1 978 077 A1

### DISCLOSURE OF THE INVENTION

However, the techniques of the related art disclosed in Patent Documents 1 to 5 have a problem in the improvement of lubricity.

Recently, as a lubricant used for a surface treatment of a metal member, a lubricant capable of stably exhibiting higher lubricity than that of a lubricant of the related art is required. However, a lubricant satisfying the requirements for high lubricity has yet to be developed.

Further, the techniques of the related art disclosed in Patent Documents 1 to 5 have the following problems.

When liquid crystal molecules of a lubricant are liquid as in the case of the lubricants disclosed in Patent Documents 1 and 2, this lubricant has a problem in that it cannot be used as a surface treatment agent.

The lubricants disclosed in Patent Documents 3 and 4 contain wax particles. Therefore, during use, it is necessary to prevent precipitation or solidification of the wax particles. Specifically, in order to maintain a dispersed state of the wax particles, it is necessary to continuously stir the lubricants. Therefore, the lubricants disclosed in Patent Documents 3 and 4 have problems not only in lubricity but also in handleability during use.

The lubricant disclosed in Patent Document 5 exhibits lubricity only in a liquid state obtained by phase transition using frictional energy, and thus has certain restrictions in usage conditions and usage environment.

The present invention has been made in consideration of the above-described circumstances, and an object thereof is to provide a surface treatment composition capable of exhibiting high lubricity and a corrosion resistance effect when applied to a metal article.

As a result of a thorough investigation for solving the above-described problems, the present inventors have found that a surface treatment composition capable of exhibiting high lubricity and a corrosion resistance effect when applied to a metal article can be provided by adopting a configuration containing not only a corrosion inhibitor but also a liquid crystal compound having a branched chain.

That is, according to the present invention, there is provided a surface treatment composition which forms a coating film on a surface of a metal member by being coated and dried on the surface, the surface treatment composition comprising: a liquid crystal compound having a branched chain; and a corrosion inhibitor, wherein the surface treatment composition forms the coating film having a non-liquid-crystal structure which is optically isotropic, and the liquid crystal compound having a branched chain is a compound represented by the formula R¹-Y¹-C¹-A-C²-Y¹-R¹ (1), wherein A represents any one of a single bond, -C(=O)-O-, -N=N-, -C(=O)-, -CH=CH-, -C≡C-, -O-, and -CH₂-; C¹ and C² each independently represents 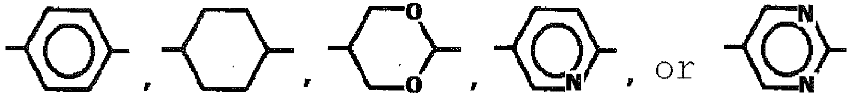 (where one of two direct bonds may be bonded to A); R¹ represents a branched alkyl group; and Y¹ represents any one of -O-, -C(=O)-O-, -O-C(=O)-, -C(=O)-NH-, and -NH-C(=O)-.

Further, there is disclosed a method of producing the above-described surface treatment composition, the method comprising: a step of mixing a corrosion inhibitor with a liquid crystal compound having a branched chain as defined above.

Further, according to the present invention, there is provided a metal article comprising: a metal member; and a coating film that is formed of the above-described surface treatment composition, in which the coating film is formed on a surface of the metal member by drying the surface treatment composition.

Further, according to the present invention, there is provided a method of producing a metal member comprising: a step of coating a surface of a metal member with the surface treatment composition; and a step of drying the surface treatment composition to form a coating film.

According to the present invention, a surface treatment composition can be provided which is capable of exhibiting high lubricity and a corrosion resistance effect when applied to a metal article.

### DETAILED DESCRIPTION OF THE INVENTION

Hereinafter, a surface treatment composition and a metal article according to the present invention will be described.

### (Surface Treatment Composition)

The surface treatment composition according to the present invention contains: a liquid crystal compound having a branched chain; and a corrosion inhibitor, wherein the surface treatment composition forms the coating film having a non-liquid-crystal structure which is optically isotropic, and the liquid crystal compound having a branched chain is a compound represented by R¹-Y¹-C¹-A-C²-Y¹-R¹ (formula (1)) as defined herein. This surface treatment composition can form a coating film on a surface of a metal member by being coated and dried on the surface. The fact that the solid coating film can be formed using the surface treatment composition according to the present invention will be described below.

In addition, the surface treatment composition according to the present invention can form the solid coating film as mentioned above. Therefore, the metal article having a surface on which the coating film is formed can stably exhibit high lubricity irrespective of usage positions and usage conditions. In addition, since the liquid crystal compound having a branched chain is used, the lubricity can be further improved. In addition, by using the surface treatment composition according to the present invention, the coating film having a good balance between lubricity and corrosion resistance performance can be formed. In addition, by using the surface treatment composition according to the present invention, the coating film having not only superior lubricity and corrosion resistance performance but also superior adhesion can be formed.

### (Liquid Crystal Compound)

First, the liquid crystal compound contained in the surface treatment composition according to the present invention will be described.

In general, the liquid crystal compound refers to a liquid compound obtained through an intermediate state having properties of both crystal and liquid unlike solid, liquid, and gas compounds. Specifically, a compound in a liquid crystal state is a cloudy liquid having viscosity which is optically anisotropic.

In addition, a molecular structure of the liquid crystal compound contains: a portion having two or more ring structures (hereinafter, referred to as "core portion") ; and a hydrocarbon group or polar group that is bonded to both terminals of the core portion as a side chain. It is considered that, in the molecular structure of the liquid crystal compound, the core portion relates to various properties of the liquid crystal compound such as anisotropy and refractive index. On the other hand, in the molecular structure of the liquid crystal compound, the side chain relates to the crystallinity of the liquid crystal compound. Hereinafter, in the description of the liquid crystal compound contained in the surface treatment composition according to the present invention, the compound including the core portion and the hydrocarbon group or polar group includes a compound not exhibiting liquid crystal properties, the core portion having two or more ring structures, and the hydrocarbon group or polar group being bonded to both terminals of the core portion.

This liquid crystal compound has a branched chain and thus is easily dissolved in a solvent described below although the reason thereof is not clear.

In addition, according to the present invention, by using the liquid crystal compound having a branched chain, the lubricity and corrosion resistance performance of the coating film formed using the surface treatment composition can be improved.

The liquid crystal compound contained in the surface treatment composition according to the present invention is a compound represented by the following formula (1).

R¹-Y¹-C¹-A-C²-Y¹-R¹ (1)

wherein
A represents any one of a single bond, -C(=O)-O-, -N=N-, -C(=O)-, -CH=CH-, -C=C-, -O-, and -CH₂-,
C¹ and C² each independently represents 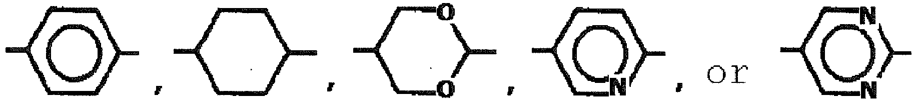 (where one of two direct bonds may be bonded to A),
R¹ represents a branched alkyl group, and
Y¹ represents any one of -O-, -C(=O)-O-, -O-C(=O)-, -C(=O)-NH-, and -NH-C(=O)-.

In the liquid crystal compound represented by the formula (1), it is preferable that Y¹ represents -O- or -C(=O)-O-.

In the liquid crystal compound represented by the formula (1), R¹ preferably represents a branched alkyl group having equal to or more than 3 and equal to or less than 22 carbon atoms, and more preferably a branched alkyl group having equal to or more than 5 and equal to or less than 18 carbon atoms. As a result, when the solid coating film is formed using the surface treatment composition according to the present invention, the solid coating film having higher lubricity and a corrosion resistance effect can be obtained. In addition, it is preferable that R¹ has one or more branched chains.

The liquid crystal compound is not particularly limited, but for example, is preferably formed of at least one compound selected from the group consisting of 4,4'-di-2-ethyl hexyloxy-1,1' -biphenyl represented by the following formula (A1), 4,4'-di-3-ethyl hexyloxy-1,1'-biphenyl represented by the following formula (A2), 4,4'-di-2-methyl heptyloxy-1,1'-biphenyl represented by the following formula (A3), 4,4'-di-3-methyl heptyloxy-1,1'-biphenyl represented by the following formula (A4), 4,4'-di-4-methyl heptyloxy-1,1'-biphenyl represented by the following formula (A5), 4,4'-di-5-methyl heptyloxy-1,1'-biphenyl represented by the following formula (A6), 4,4'-di-2-ethyl octyloxy-1,1'-biphenyl represented by the following formula (A7), 4,4'-di-3-ethyloctyloxy-1,1'-biphenyl represented by the following formula (A8), 4,4'-di-3-n-propylheptyloxy-1,1'-biphenyl represented by the following formula (A9), 4,4'-di-3-n-propyl nonyloxy-1,1'-biphenyl represented by the following formula (A10), 4,4'-di-3-ethyl-6-methyl nonyloxy-1,1'-biphenyl represented by the following formula (A11), and 4,4'-di-2-methyl hexadecyloxyl-1,1'-biphenyl represented by the following formula (A12) . As a result, when the solid coating film is formed using the surface treatment composition according to the present invention, the solid coating film having higher lubricity and a corrosion resistance effect can be obtained.

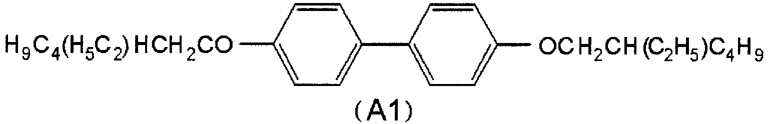

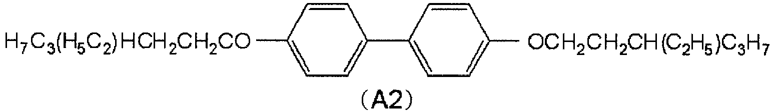

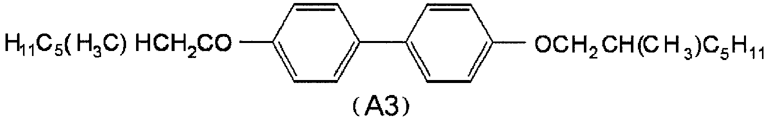

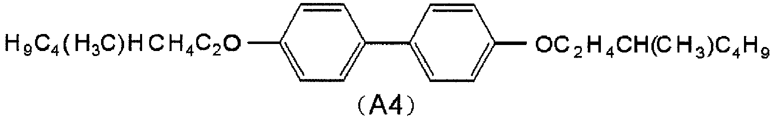

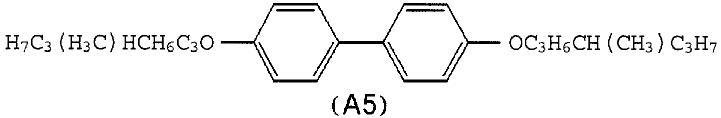

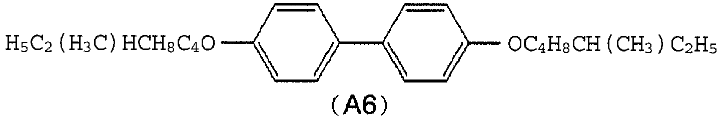

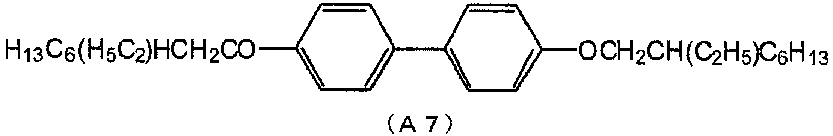

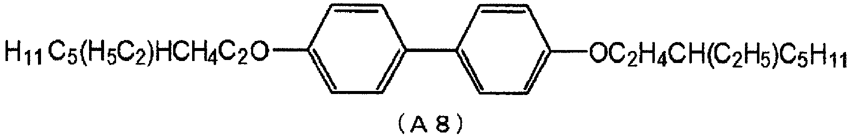

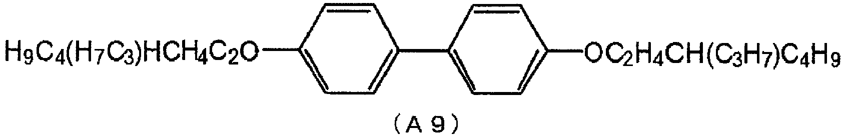

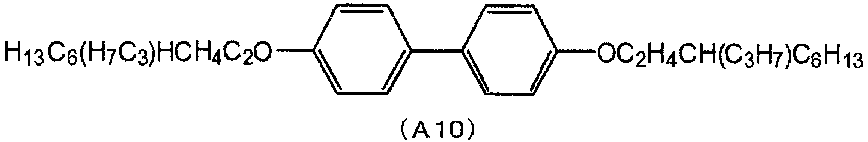

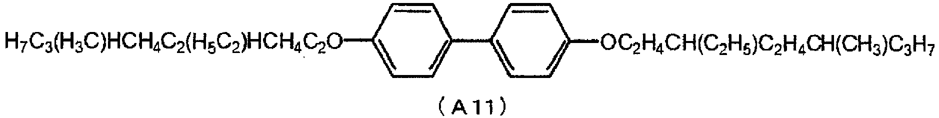

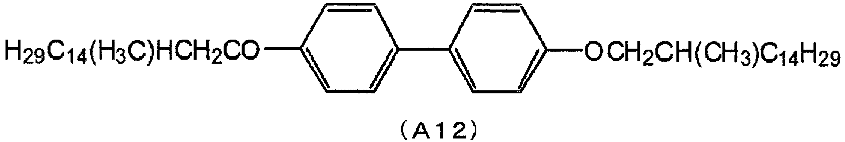

In addition, the liquid crystal compound having a branched chain has a content of, preferably equal to or more than 0. 01 wt% and equal to or less than 30.0 wt% and more preferably equal to or more than 0.1 wt% and equal to or less than 15.0 wt% with respect to the total amount of the corrosion inhibitor. As a result, by using the surface treatment composition according to the present invention, the solid coating film exhibiting higher lubricity and having a corrosion resistance effect can be formed.

### <Corrosion Inhibitor>

The corrosion inhibitor used in the surface treatment composition according to the present invention is not particularly limited, and for example, an alkoxysilane oligomer is preferably used. As a result, using an interaction between the corrosion inhibitor and the liquid crystal compound having a branched chain, higher lubricity can be imparted to the formed solid coating film. In addition, the corrosion inhibitor may have a coating film-forming function. That is, the corrosion inhibitor may function as a coating film-forming agent having a corrosion resistance effect. Examples of the coating film-forming agent include an alkoxysilane oligomer.

The alkoxysilane oligomer can be polycondensed to have linear molecules when synthesized using an acid catalyst such as hydrochloric acid and can be formed as a bulk gel when synthesized using a basic catalyst. It is preferable that the weight average molecular weight of the alkoxysilane oligomer is large to some extent from the viewpoints of the corrosion resistance performance and an anti-cracking function of the coating film and the storage properties of the corrosion inhibitor. Specifically, the weight average molecular weight of the alkoxysilane oligomer is preferably equal to or more than 1000 and equal to or less than 10000 and more preferably equal to or more than 2000 and equal to or less than 5000. As a result, the solid coating film having superior film forming properties and corrosion resistance performance can be formed.

In addition, when a material containing an alkoxysilane oligomer is used as the corrosion inhibitor, the coating film having higher corrosion resistance performance can be formed. Further, when an alkoxysilane oligomer having a portion of silicon in the oligomer molecules substituted with titanium is used as the alkoxysilane oligomer, the adhesion of the coating film on a surface of a metal member can be improved. As a result, even when the coating film is cracked, the coating film can be prevented from being peeled off from the metal member.

Meanwhile, the alkoxysilane oligomer having a portion of silicon substituted with titanium can be synthesized by adding a small amount of an acid catalyst such as hydrochloric acid and water to an alcohol solution containing alkoxysilane materials and titanium alkoxide, and hydrolyzing the solution to be polycondensed. However, when highly reactive titanium alkoxide is rapidly hydrolyzed, precipitation occurs. Therefore, it is preferable that, before mixing titanium alkoxide with the alkoxysilane materials in the alcohol solution and polycondensing the mixture, 40% to 60% of alkoxy groups in titanium alkoxide are blocked or substituted with a chelating agent to reduce the reaction activity of titanium alkoxide.

In addition, in the surface treatment composition according to the present invention, in order to form the coating film having a thickness capable of obtaining a practical level of corrosion resistance performance on a surface of a metal member, the total content of silicon and titanium in the alcohol solution of the alkoxysilane oligomer containing a titanium component is preferably 5 wt% to 20 wt% and more preferably 7 wt% to 15 wt% in terms of SiO₂ and TiO₂, respectively.

In addition, when introduced into the alkoxysilane oligomer, an alkoxysilane monomer having an organic group directly bonded to silicon forms an alkoxysilane oligomer having a state where the organic group is bonded to a portion of silicon. Due to the presence of the organic group bonded to silicon, the coating film formed on the surface of the metal member can be made to be soft, and an effect of preventing the coating film from being cracked can be obtained. The alkoxysilane monomer is not particularly limited, but for example, is at least one compound selected from the group consisting of methyltrimethoxysilane, methyltriethoxysilane, ethyltrimethoxysilane, vinyltrimethoxysilane, vinyltriethoxysilane, and γ-methacryloxypropyltrimethoxysilane which are less likely to decrease corrosion resistance performance. Among these, vinyltrimethoxysilane is preferably used. As a result, the coating film can be prevented from being cracked, and the corrosion resistance performance can be made to be superior during practical use.

It is preferable that the surface treatment composition according to the present invention contains a solvent. When the surface treatment composition contains a solvent, the liquid crystal compound having a branched chain is dissolved or uniformly dispersed in the solvent. As a result, unlike the lubricant containing wax described above in "DISCLOSURE OF THE INVENTION", it is not necessary to continuously stir the surface treatment composition. In addition, by dissolving or uniformly dispersing the liquid crystal compound in the solvent, the liquid crystal compound having a branched chain and the corrosion inhibitor can be uniformly mixed using a simple method. Therefore, an interaction between the liquid crystal compound having a branched chain and the corrosion inhibitor is likely to occur, and the solid coating film exhibiting higher lubricity and having a corrosion resistance effect can be formed. The liquid crystal compound used according to the present invention has a branched chain and thus is easily dissolved in the solvent. Therefore, unlike the waxes described above in Patent Documents 3 and 4, the liquid crystal compound used according to the present invention is not precipitated and solidified in the solvent even when uniformly dispersed in the solvent.

It is preferable that the solvent contains an alcohol. As a result, the solubility of the liquid crystal compound in the solvent can be improved.

The alcohol is not particularly limited, and examples thereof include isopropyl alcohol, n-propyl alcohol, n-butanol, propylene glycol monomethyl ether, ethylene glycol-t-butoxide, ethyl alcohol, and glycol ether. Among these, isopropyl alcohol, propylene glycol monomethyl ether, ethylene glycol-t-butoxide, n-propyl alcohol, or n-butanol is preferable, and isopropyl alcohol is more preferable. By the solvent containing the alcohol, the solubility of the liquid crystal compound in the solvent is further improved.

In addition, the surface treatment composition according to the present invention forms the coating film having a non-liquid-crystal structure which is optically isotropic. The reason will be described below.

### (Method of Producing Surface Treatment Composition)

A method of producing the surface treatment composition according to the present invention includes a step of mixing a corrosion inhibitor with a liquid crystal compound having a branched chain as defined above. As described above, the surface treatment composition according to the present invention exhibits the interaction between the liquid crystal compound having a branched chain and the corrosion inhibitor. In addition, in the method of producing the surface treatment composition according to the present invention, it is preferable that, during the mixing of the liquid crystal compound having a branched chain with the corrosion inhibitor, the liquid crystal compound is dissolved or dispersed in the solvent while mixing with the solvent.

### (Metal Article)

The metal article according to the present invention includes: a metal member; and a coating film that is formed on a surface of the metal member using the surface treatment composition. This coating film is formed by drying the surface treatment composition. As a result, the metal article having corrosion resistance performance and high lubricity can be obtained.

This surface treatment composition containing the liquid crystal compound having a branched chain and the corrosion inhibitor can form the solid coating film on the surface of the metal member by being coated and dried on the surface. The reason is considered to be that, although the surface treatment composition according to the present invention contains the liquid crystal compound, the entire amount of the liquid crystal compound is solidified after drying. Specifically, when dried, the surface treatment composition according to the present invention forms the appropriately soft coating film without losing adhesion with the metal member. In addition, according to the present invention, the liquid crystal compound has a branched chain and thus can impart high lubricity while maintaining the performance as the corrosion inhibitor.

In addition, the reason why the metal article according to the present invention has high lubricity is not necessarily clear but is presumed to be as follows: when the coating film is formed using the liquid crystal compound having a branched chain as a side chain in the molecular structure, the frictional coefficient of the metal article including the coating film is reduced by aggregation of branched chains present in the coating film.

The coating film which is formed using the surface treatment composition according to the present invention forms a non-liquid-crystal structure which is optically isotropic. According to the technical level of the related art, the formation of a coating film which is optically anisotropic is preferable. However, according to the present invention, it can be clearly seen that higher lubricity can be exhibited by forming the coating film having the non-liquid-crystal structure which is optically isotropic. Further, according to the present invention, it is considered that, since the branched chain is present in the molecular structure of the liquid crystal compound, the orientation between liquid crystal molecules is lost, and the coating film cannot be anisotropic. The reason why the coating film forms the non-liquid-crystal structure which is optically isotropic is not necessarily clear but is presumed to be as follows: since the liquid crystal compound having a branched chain is used, the orientation between molecules in the coating film is disturbed, and the coating film cannot be anisotropic.

When the surface treatment composition according to the present invention is coated and dried on the metal member, the formation of the non-liquid-crystal structure which is optically isotropic can be verified using the following method. The verification can be made by interposing the coating film, which is obtained by drying the surface treatment composition, between polarizing plates and irradiating the coating film with light in a plane direction of the polarizing plates. When the coating film obtained by drying the surface treatment composition has the non-liquid-crystal structure, the light does not pass through the coating film. On the other hand, when the coating film obtained by drying the surface treatment composition has a liquid crystal structure which is optically anisotropic, the light passes through the coating film.

In addition, the thickness of the coating film which is formed using the surface treatment composition according to the present invention is preferably equal to or more than 0.1 µm and equal to or less than 3.0 µm and more preferably equal to or more than 0.5 µm and equal to or less than 2.0 µm. As a result, lubricity required by a client can be sufficiently imparted to the metal article, the amount of the surface treatment composition coated on the surface of the metal article can be suppressed, and plural functions can be imparted at the same time. Therefore, the above-described thickness range is preferable from the viewpoint of cost. Further, when the thickness of the coating film is in the above-described range, a practical corrosion resistance performance can be exhibited, and the coating film capable of preventing cracking and peeling can be formed.

In addition, the overall frictional coefficient of the metal article according to the present invention is preferably equal to or more than 0.030 and equal to or less than 0.500 and more preferably equal to or more than 0.050 and equal to or less than 0.300. As a result, the metal article having higher lubricity can be obtained. The overall frictional coefficient can be measured and calculated according to JIS B 1084 by using the metal article as a specimen.

In addition, it is preferable that the surface of the metal member is formed of one material of zinc, a zinc alloy, iron, stainless steel, aluminum, and brass.

In addition, the metal member according to the present invention is not particularly limited, and examples thereof include a bolt and a screw. When a small-sized metal member such as a bolt or a screw is used, there is an advantageous effect in that the surface of the metal member is easily coated with the surface treatment composition.

In addition, it is preferable that the metal article according to the present invention is a metal-plated product obtained by metal plating or a metal-coated product obtained by metal flake coating. In addition, the metal-plated product is preferably a product plated with zinc or a zinc alloy, and the metal-coated product is preferably a product coated with a zinc-aluminum composite coating material. As a result, the peeling and cracking of the formed coating film can be prevented.

### (Method of Producing Metal Article)

A method of producing the metal article according to the present invention includes: a step of coating a surface of a metal member with the surface treatment composition of the present invention; and a step of drying the surface treatment composition to form a coating film.

In addition, in the step of forming the coating film in the method of producing the metal article according to the present invention, a temperature at which the surface treatment composition is dried is preferably equal to or higher than 25°C and equal to or lower than 200°C and more preferably equal to or higher than 80°C and equal to or lower than 120°C. As a result, the orientation of the liquid crystal compound contained in the surface treatment composition can be controlled.

Hereinafter, a method of forming the coating film on the surface of the metal member will be specifically described. However, the film forming method is not limited to the following description.

For example, when a small-sized metal member such as a bolt or a screw is used, for example, a dip and spin coating method is preferably used. When this method is used, the coating film having higher lubricity can be formed on a metal member plated with zinc or a metal member coated with a zinc-aluminum composite coating material.

Here, the dip and spin coating method refers to a method including: dipping a metal member in a solution containing the surface treatment composition; pulling the metal member out from the solution; and spinning the obtained metal member using a centrifugal separator to throw off the remaining surface treatment composition attached to the surface of the metal member. In this way, the metal member is coated with the surface treatment composition and then is heated and dried. As a result, the solid coating film can be formed.

As a method of coating the surface treatment composition according to the present invention, an appropriate method corresponding to the size and shape of the metal member is preferably used. In addition to the dip and spin coating method, for example, a method using a roll coater, a dip drain method, and a method of removing the remaining surface treatment composition using a roll or a brush are used.

Hereinabove, the embodiments of the present invention have been described. However, these embodiments are merely examples of the present invention, and various configurations other than the above-described configurations can be adopted.

### [Examples]

Hereinafter, the present invention will be described using Examples and Comparative Examples but is not limited thereto.

### (Example 1)

### (Preparation of Corrosion Inhibitor)

A corrosion inhibitor was prepared as follows.

Vinyltrimethoxysilane (manufactured by Dow Corning Toray Co., Ltd., SH-6300) was mixed with an isopropyl alcohol (hereinafter, referred to as "IPA") solution of ETHYL SILICATE 40 (manufactured by Tama Chemicals Co., Ltd, pentamer obtained by polycondensation of tetraethoxysilane containing 40 wt% of silicon in terms of SiO₂.) such that the content thereof was 2 mol% with respect to the total amount of the alkoxysilane materials, and the obtained mixture was stirred. This solution was held at 40°C for 12 hours for polycondensation. In this way, an IPA solution of an alkoxysilane oligomer containing 20.2 wt% of silicon in terms of SiO₂ was obtained.

Next, 3 parts by weight of a propylene glycol (hereinafter, referred to as "PGME") solution containing 10 wt% of polyvinyl butyral, 5 parts by weight of an IPA solution containing 1.2 wt% of boric acid, 23.8 parts by weight of IPA, 5.4 parts by weight of a titanium octylene glycol chelate compound (manufactured by Nippon Soda Co., Ltd., TOG) containing isopropoxide as an alkyl group, and 10 parts by weight of PGME, and 15 parts by weight of ethylene glycol-t-butoxide were mixed with 52.8 parts by weight of the obtained IPA solution of the alkoxysilane oligomer so as to prepare a corrosion inhibitor.

### (Preparation of Liquid Crystal Compound)

### Preparation of 4,4'-di-2-ethyl hexyloxy-1,1'-biphenyl

9.3 g (0.050 mol) of 4,4'-biphenol, 23.0 g of potassium carbonate, and 60 ml of DMF were mixed with each other. 30.4 g (0.157 mol) of 1-bromo-2-ethylhexane was added to this mixture, followed by stirring at 70°C for 72 hours. This reaction solution was distilled under reduced pressure to remove DMF and unreacted 1-bromo-2-ethylhexane. Next, water and diethyl ether were added to the obtained solution, followed by solid-liquid separation and washing. Next, the obtained ether layer was dried overnight using anhydrous sodium sulfate. After drying, anhydrous sodium sulfate was removed by suction filtration, and the filtrate was evaporated to obtain an oil. This oil was distilled in a vacuum to remove 1-bromo-2-ethylhexane. As a result, a liquid crystal compound having a branched chain was obtained.

### (Preparation of Surface Treatment Composition)

Next, the obtained liquid crystal compound and the obtained corrosion inhibitor were mixed with each other. Specifically, 48.5 parts by weight of the corrosion inhibitor was mixed with 1.5 parts by weight of the synthesized liquid crystal compound, followed by stirring with a magnetic stirrer for 15 minutes so as to uniformly disperse and dissolve the liquid crystal compound in the corrosion inhibitor. As a result, a surface treatment composition containing the liquid crystal compound having a branched chain and the corrosion inhibitor was obtained.

### (Preparation of Metal Article)

A half-screw flange bolt M8L55 plated with zinc was coated with the obtained surface treatment composition using a dip and spin coating method. Specifically, the dried white half-screw flange bolt M8L55 which was not subjected to an activation treatment was dipped in a solution of the surface treatment composition. The amount of the surface treatment composition coated on the bolt was adjusted such that a coating film having a thickness of equal to or more than 0.5 µm and equal to or less than 2.0 µm after drying was formed. Next, the pulled out half-screw flange bolt M8L55 was put into a stainless steel basket attached to a centrifugal separator to perform a centrifugal separation treatment for one second under conditions of a radius of gyration of 15 cm and a rotating speed of about 700 rpm. Next, the half-screw flange bolt M8L55 was put into a drying machine and was held at 100°C for 30 minutes. As a result, a metal article having a surface on which the dry coating film was formed was obtained. The obtained dry coating film was formed on the entire surface of the metal article.

### (Evaluation Method)

Overall frictional coefficient: The frictional coefficient values of five metal articles having a surface on which the dry coating film was formed were measured and calculated according to JIS B1084 using a tester equipped with a screw fastening device (manufactured by Iwata MFG Co., Ltd., a desktop tester equipped with a screw fastening device). In this example, the average of the values calculated from the five metal articles was obtained as a value of the overall frictional coefficient.

Determination of a liquid crystal structure of a coating film: a plastic film was coated with the surface treatment composition to prepare a dry coating film. This coating film was isolated, was interposed between two polarizing plates with polarizing directions perpendicular to each other, and was irradiated with light in a plane direction of the polarizing plates. As the light, fluorescent light was used. Whether or not the light passed through the coating film was determined by visual inspection. When the light did not pass through the coating film, it was determined that the coating film had a non-liquid-crystal structure. In addition, when the light passed through the coating film, it was determined that the coating film had a liquid crystal structure.

### (Example 2)

The same method as that of Example 1 was used, except that a half-screw flange bolt M8L55 coated with a zinc-aluminum composite coating material was used.

### (Comparative Example 1)

The same method as that of Example 1 was used, except that a half-screw flange bolt M8L55 plated with zinc was coated with a surface treatment composition obtained from the corrosion inhibitor of Example 1 without mixing with the liquid crystal compound.

### (Comparative Example 2)

The same method as that of Example 1 was used, except that a half-screw flange bolt M8L55 coated with a zinc composite coating material was coated with a surface treatment composition obtained from the corrosion inhibitor of Example 1 without mixing with the liquid crystal compound.

The evaluation results relating to the above-described evaluation items are shown in Table 1 below.

**[Table 1]**

| | Example 1 | Example 2 | Comparative Example 1 | Comparative Example 2 |
|---|---|---|---|---|
| Liquid Crystal Compound | Present | Present | Absent | Absent |
| Overall Frictional Coefficient | 0.140 | 0.142 | 0.278 | 0.210 |
| Liquid Crystal Structure of Coating Film | Non-Liquid-Crystal Structure | Non-Liquid-Crystal Structure | Not Determined | Not Determined |

The metal articles of the Examples exhibited high lubricity and had a corrosion resistance effect unlike the metal articles of the Comparative Examples.

## Claims

1. A surface treatment composition which forms a coating film on a surface of a metal member by being coated and dried on the surface, the surface treatment composition comprising:
a liquid crystal compound having a branched chain; and
a corrosion inhibitor,
wherein
the surface treatment composition forms the coating film having a non-liquid-crystal structure which is optically isotropic, and
the liquid crystal compound having a branched chain is a compound represented by the following formula (1):
R¹-Y¹-C¹-A-C²-Y¹-R¹ (1)
wherein
A represents any one of a single bond, -C(=O)-O-, -N=N-, -C(=O)-, -CH=CH-, -C≡C-, -O-, and -CH₂-,
C¹ and C² each independently represents 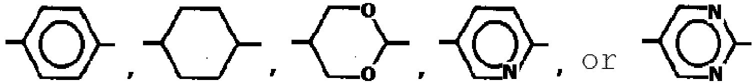
(where one of two direct bonds may be bonded to A),
R¹ represents a branched alkyl group, and
Y¹ represents any one of -O-, -C(=O)-O-, -O-C(=O)-, -C(=O)-NH-, and -NH-C(=O)-.

2. The surface treatment composition according to claim 1, further comprising:
a solvent,
wherein the liquid crystal compound is dissolved or uniformly dispersed in the solvent.

3. The surface treatment composition according to claim 2, wherein the solvent contains an alcohol.

4. The surface treatment composition according to any one of claims 1 to 3,
wherein in the liquid crystal compound represented by the formula (1), R¹ represents a branched alkyl group having equal to or more than 3 and equal to or less than 22 carbon atoms.

5. The surface treatment composition according to any one of claims 1 to 4,
wherein the liquid crystal compound is formed of at least one compound selected from the group consisting of
4,4'-di-2-ethyl hexyloxy-1,1'-biphenyl,
4,4'-di-3-ethyl hexyloxy-1,1'-biphenyl,
4,4'-di-2-methyl heptyloxy-1,1'-biphenyl,
4,4'-di-3-methyl heptyloxy-1,1'-biphenyl,
4,4'-di-4-methyl heptyloxy-1,1'-biphenyl,
4,4'-di-5-methyl heptyloxy-1,1'-biphenyl,
4,4'-di-2-ethyl octyloxy-1,1'-biphenyl,
4,4'-di-3-ethyloctyloxy-1,1'-biphenyl,
4,4'-di-3-n-propylheptyloxy-1,1'-biphenyl,
4,4'-di-3-n-propyl nonyloxy-1,1'-biphenyl,
4,4'-di-3-ethyl-6-methyl nonyloxy-1,1'-biphenyl, and
4,4'-di-2-methyl hexadecyloxyl-1,1'-biphenyl.

6. The surface treatment composition according to any one of claims 1 to 5,
wherein the corrosion inhibitor is formed of a material containing an alkoxysilane oligomer.

7. The surface treatment composition according to any one of claims 1 to 6,
wherein the liquid crystal compound has a content of equal to or more than 0.01 wt% and equal to or less than 30.0 wt% with respect to a total amount of the corrosion inhibitor.

8. A metal article comprising:
a metal member; and
a coating film that is formed of the surface treatment composition according to any one of claims 1 to 7,
wherein the coating film is formed on a surface of the metal member by drying the surface treatment composition.

9. The metal article according to claim 8,
wherein a thickness of the coating film is equal to or more than 0.1 µm and equal to or less than 3.0 µm.

10. The metal article according to claim 8 or 9,
wherein an overall frictional coefficient which is measured and calculated according to JIS B 1084 by using the metal article as a specimen is equal to or more than 0.030 and equal to or less than 0.500.

11. The metal article according to any one of claims 8 to 10,
wherein the surface of the metal member is formed of one material of zinc, a zinc alloy, iron, stainless steel, aluminum, and brass.

12. The metal article according to any one of claims 8 to 11, wherein the metal member is a bolt or a screw.

13. A method of producing a metal member comprising:
a step of coating a surface of a metal member with the surface treatment composition according to any one of claims 1 to 7; and
a step of drying the surface treatment composition to form a coating film.

## Patentansprüche

1. Oberflächenbehandlungszusammensetzung, die eine Beschichtungsschicht auf einer Oberfläche eines Metallmitglieds dadurch ausbildet, dass sie auf die Oberfläche aufgetragen und getrocknet wird, wobei die Oberflächenbehandlungszusammensetzung umfasst:
eine Flüssigkristallverbindung mit einer verzweigten Kette und
einen Korrosionsinhibitor,
wobei
die Oberflächenbehandlungszusammensetzung die Beschichtungsschicht mit einer Nicht-Flüssigkristallstruktur, die optisch isotrop ist, ausbildet, und
die Flüssigkristallverbindung mit einer verzweigten Kette eine Verbindung ist, die durch die nachstehende Formel (1) repräsentiert wird:
R¹-Y¹-C¹-A-C²-Y¹-R¹ (1),
worin
A ein jegliches aus einer Einfachbindung, -C(=O)-O-, -N=N-, -C(=O)-, -CH=CH-, -C≡C-, -O- und -CH₂- repräsentiert,
C¹ und C² jeweils unabhängig 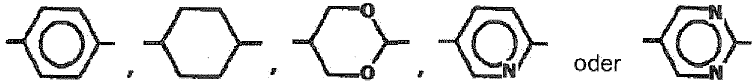
repräsentieren (wobei eine der zwei direkten Bindungen an A gebunden sein kann),
R¹ eine verzweigte Alkylgruppe repräsentiert und
Y¹ ein jegliches aus -O-, -C(=O)-O-, -O-C(=O)-, -C(=O)-NH- und -NH-C(=O)- repräsentiert.

2. Oberflächenbehandlungszusammensetzung gemäß Anspruch 1, ferner umfassend:
ein Lösungsmittel,
wobei die Flüssigkristallverbindung in dem Lösungsmittel gelöst oder gleichförmig dispergiert ist.

3. Oberflächenbehandlungszusammensetzung gemäß Anspruch 2,
wobei das Lösungsmittel einen Alkohol enthält.

4. Oberflächenbehandlungszusammensetzung gemäß einem jeglichen der Ansprüche 1 bis 3,
wobei in der durch die Formel (1) repräsentierten Flüssigkristallverbindung R¹ eine verzweigte Alkylgruppe mit gleich zu oder mehr als 3 und gleich zu oder weniger als 22 Kohlenstoffatomen repräsentiert.

5. Oberflächenbehandlungszusammensetzung gemäß einem jeglichen der Ansprüche 1 bis 4,
wobei die Flüssigkristallverbindung aus mindestens einer Verbindung gebildet wird,
die aus der Gruppe ausgewählt ist, die aus
4,4'-Di-2-ethylhexyloxy-1,1'-biphenyl,
4,4'-Di-3-ethylhexyloxy-1,1'-biphenyl,
4,4'-Di-2-methylheptyloxy-1,1'-biphenyl,
4,4'-Di-3-methylheptyloxy-1,1'-biphenyl,
4,4'-Di-4-methylheptyloxy-1,1'-biphenyl,
4,4'-Di-5-methylheptyloxy-1,1'-biphenyl,
4,4'-Di-2-ethyloctyloxy-1,1'-biphenyl,
4,4'-Di-3-ethyloctyloxy-1,1'-biphenyl,
4,4'-Di-3-n-propylheptyloxy-1,1'-biphenyl,
4,4'-Di-3-n-propylnonyloxy-1,1'-biphenyl,
4,4'-Di-3-ethyl-6-methylnonyloxy-1,1'-biphenyl und
4,4'-Di-2-methylhexadecyloxyl-1,1'-biphenyl
besteht.

6. Oberflächenbehandlungszusammensetzung gemäß einem jeglichen der Ansprüche 1 bis 5,
wobei der Korrosionsinhibitor aus einem Material gebildet wird, das ein Alkoxysilanoligomer enthält.

7. Oberflächenbehandlungszusammensetzung gemäß einem jeglichen der Ansprüche 1 bis 6,
wobei die Flüssigkristallverbindung einen Gehalt von gleich zu oder mehr als 0,01 Gew.-% und gleich zu oder weniger 30,0 Gew.-%, bezüglich einer Gesamtmenge des Korrosionsinhibitors, aufweist.

8. Metallartikel, umfassend:
ein Metallmitglied und
eine Beschichtungsschicht, die aus der Oberflächenbehandlungszusammensetzung gemäß einem jeglichen der Ansprüche 1 bis 7 ausgebildet ist,
wobei die Beschichtungsschicht auf einer Oberfläche des Metallmitglieds durch Trocknen der Oberflächenbehandlungszusammensetzung ausgebildet ist.

9. Metallartikel gemäß Anspruch 8,
wobei eine Dicke der Beschichtungsschicht gleich zu oder mehr als 0,1 µm und gleich zu oder weniger als 3,0 µm beträgt.

10. Metallartikel gemäß Anspruch 8 oder 9,
wobei ein Gesamtreibungskoeffizient, der gemäß JIS B 1084 unter Verwendung des Metallartikels als ein Probestück gemessen und berechnet wird, gleich zu oder mehr als 0,030 und gleich zu oder weniger als 0,500 beträgt.

11. Metallartikel gemäß einem jeglichen der Ansprüche 8 bis 10,
wobei die Oberfläche des Metallmitglieds aus einem Material aus Zink, einer Zinklegierung, Eisen, rostfreiem Stahl, Aluminium und Messing ausgebildet ist.

12. Metallartikel gemäß einem jeglichen der Ansprüche 8 bis 11,
wobei das Metallmitglied ein Bolzen oder eine Schraube ist.

13. Verfahren zum Herstellen eines Metallmitglieds, umfassend:
einen Schritt eines Beschichtens einer Oberfläche eines Metallmitglieds mit der Oberflächenbehandlungszusammensetzung gemäß einem jeglichen der Ansprüche 1 bis 7 und
einen Schritt eines Trocknens der Oberflächenbehandlungszusammensetzung zur Ausbildung einer Beschichtungsschicht.

## Revendications

1. Composition de traitement de surface qui forme un film de revêtement sur une surface d'une pièce de métal lorsqu'on en revêt cette surface et qu'on l'y fait sécher, laquelle composition de traitement de surface comprend :
- un composé à chaîne ramifiée formant des cristaux liquides,
- et un inhibiteur de corrosion,
et laquelle composition de traitement de surface forme un film de revêtement dont la structure n'est pas celle d'un cristal liquide et qui est optiquement isotrope,
et dans laquelle le composé à chaîne ramifiée formant des cristaux liquides est un composé représenté par la formule (1) suivante :
R¹-Y¹-C¹-A-C²-Y¹-R¹ (1)
dans laquelle
- A représente une liaison simple ou l'un des raccords de formule -C(=O)-O-, -N=N-, -C(=O)-, -CH=CH-, -C≡C-, -O- ou -CH₂-,
- C¹ et C² représentent chacun, indépendamment, un groupe représenté par 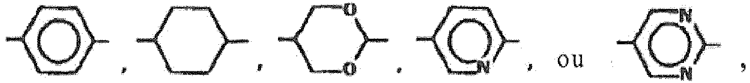 où l'une des deux liaisons directes peut être raccordée à l'entité symbolisée par A,
- R¹ représente un groupe alkyle ramifié,
- et Y¹ représente l'un des raccords de formule -O-, -C(=O)-O-, -O-C(=O)-, -C(=O)-NH- ou -NH-C(=O)-.

2. Composition de traitement de surface, conforme à la revendication 1, qui comprend en outre un solvant et dans laquelle le composé formant des cristaux liquides se trouve dissous ou dispersé de manière homogène dans ce solvant.

3. Composition de traitement de surface, conforme à la revendication 2, dans laquelle le solvant contient un alcool.

4. Composition de traitement de surface, conforme à l'une des revendications 1 à 3, dans laquelle, dans le composé formant des cristaux liquides représenté par la formule (1), R¹ représente un groupe alkyle ramifié comportant d'au moins 3 à au plus 22 atomes de carbone.

5. Composition de traitement de surface, conforme à l'une des revendications 1 à 4, dans laquelle le composé formant des cristaux liquides est au moins un composé choisi dans l'ensemble formé par les suivants :
4,4'-di(2-éthyl-hexyloxy)-1,1'-biphényle
4,4'-di(3-éthyl-hexyloxy)-1,1'-biphényle
4,4'-di(2-méthyl-heptyloxy)-1,1'-biphényle
4,4'-di(3-méthyl-heptyloxy)-1,1'-biphényle
4,4'-di(4-méthyl-heptyloxy)-1,1'-biphényle
4,4'-di(5-méthyl-heptyloxy)-1,1'-biphényle
4,4'-di(2-éthyl-octyloxy)-1,1'-biphényle
4,4'-di(3-éthyl-octyloxy)-1,1'-biphényle
4,4'-di(3-n-propyl-heptyloxy)-1,1'-biphényle
4,4'-di(3-n-propyl-nonyloxy)-1,1'-biphényle
4,4'-di(3-éthyl-6-méthyl-nonyloxy)-1,1'-biphényle
et 4,4'-di(2-méthyl-hexadécyloxy)-1,1'-biphényle

6. Composition de traitement de surface, conforme à l'une des revendications 1 à 5, dans laquelle l'inhibiteur de corrosion est constitué par un matériau comportant un oligomère d'alcoxysilane.

7. Composition de traitement de surface, conforme à l'une des revendications 1 à 6, dans laquelle le composé formant des cristaux liquides se trouve en une proportion supérieure ou égale à 0,01 % en poids, mais inférieure ou égale à 30,0 % en poids, par rapport à la quantité totale d'inhibiteur de corrosion.

8. Article en métal comprenant :
- une pièce de métal,
- et un film de revêtement formé à partir d'une composition de traitement de surface conforme à l'une des revendications 1 à 7,
dans lequel le film de revêtement a été formé sur une surface de la pièce de métal par séchage de la composition de traitement de surface.

9. Article en métal conforme à la revendication 8, dans lequel l'épaisseur du film de revêtement est supérieure ou égale à 0,1 µm, mais inférieure ou égale à 3,0 µm.

10. Article en métal conforme à la revendication 8 ou 9, dont le coefficient global de frottement, obtenu par des mesures et calculs conformes à la norme JIS B 1084 effectués avec l'article en métal pour échantillon, est supérieur ou égal à 0,030, mais inférieur ou égal à 0,500.

11. Article en métal conforme à l'une des revendications 8 à 10, dans lequel la surface de la pièce de métal est en l'un des matériaux suivants : zinc, alliage de zinc, fer, acier inoxydable, aluminium et laiton.

12. Article en métal conforme à l'une des revendications 8 à 11, dans lequel la pièce de métal est un boulon ou une vis.

13. Procédé de fabrication d'une pièce de métal, comportant :
- une étape de revêtement d'une surface d'une pièce de métal avec une composition de traitement de surface conforme à l'une des revendications 1 à 7,
- et une étape de séchage de la composition de traitement de surface, afin de former un film de revêtement.
